# EUROPEAN PATENT APPLICATION

(11) **EP 1 160 715 A2**
(43) Date of publication of application: **05.12.2001**
(21) Application number: 01304675.0
(22) Date of filing: 25.05.2001
(51) Int. Cl.: G06F 17/60

(54) **Computerised record keeping and process control**

(30) Priority: 25.05.2000 US 579347
(71) Applicant: iLaunch Inc., San Mateo, California 94401 (US)
(72) Inventor: Mushtaq, Bahadur, North Sydney, New South Wales 2060 (AU)
(74) Representative: Hale, Peter

(57) **Abstract**

General purpose computerised record keeping and process control tools that are readily customisable to the particular needs of each user. Aspects include a customisable record keeping and process controlling computer system, a customisation process and customisable software programs for such a system. They involve a template maker, existing as data in a database, to construct templates, existing as data in a database, for data entry, the template maker being operable by entering or selecting data to construct labelled fields in a desktop template for display. A desktop template being operable by entering data into the labelled fields to create documents. And, a work flow maker, existing as data in a database, to construct a series of steps for specified templates, that define an ordered series of destinations for documents created by those templates to follow, ending in a selected folder in which the documents are saved.

## Description

This invention concerns general purpose computerised record keeping and process control tools that are readily customisable to the particular needs of each user. In particular, aspects of the invention include a customisable record keeping and process controlling computer system, and a customisation process and customisable software programs for such a system.

Records are commonly stored in electronic form in databases. The records can be retrieved for use by applications software. For instance, names and addresses can be retrieved by word processing software to automatically populate letters as they are produced.
Work processes are typically learned through training and practising. Recently there have been moves towards standardisation in order to be able to measure performance in terms of quality outcomes. These moves have generally involved intensive documentation of work processes.
The idea of the paperless office has been an aspiration of software developers for some time. A number of sophisticated specialised applications are available to businesses. These applications require customisation at the programming level to be useful, and they have limited interoperability with other applications software.

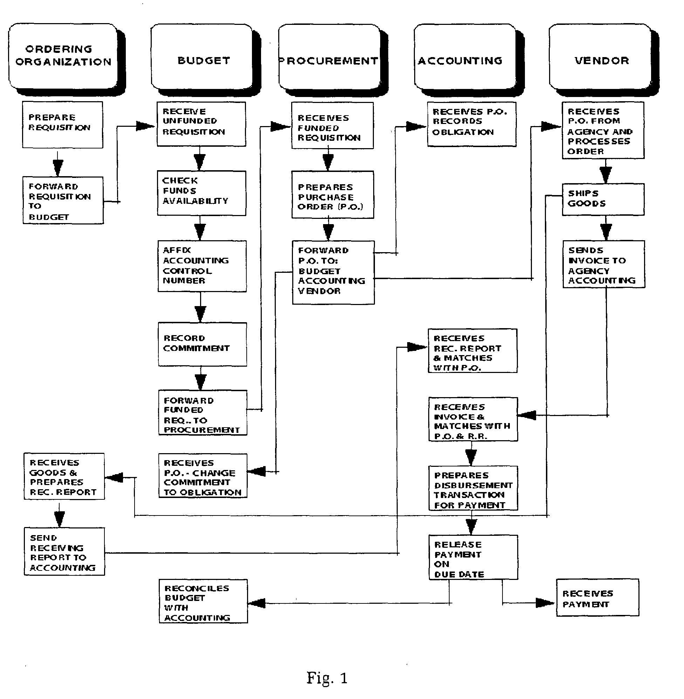

Fig. 1 provides a graphic overview of common corporate financial operations that are situated between internal customers and external vendors. Many sub-processes, such as those for order fulfillment and accounts payable, are not shown. This includes multiple decomposable tasks that potentially involve multiple agents working within or across organizational units on different types of documents (purchase orders, invoices, etc.) with information systems.This diagram highlights the need for a super application process manager to sit on top of several existing disparate systems in order to provide a uniform view via integrated processes. The cost of physically integrating these diverse applications is not justified when compared to the cost of a flexible out of the box solution.

The present invention is defined in the accompanying independent claims. Some preferred features are recited in the dependent claims.

According to an embodiment of the invention there is provided a customisable record keeping and process controlling computer system, including:
A template maker, existing as data in a database, to construct templates, existing as data in a database, for data entry, operable by entering or selecting data to construct labelled fields in a desktop template for display. The desktop templates are operable by entering data into the labelled fields to create documents.
And, a Work Flow maker, existing as data in a database, to construct a series of steps for specified templates, called a Work Flow, that define an ordered series of destinations for documents created by those templates to follow, ending in a selected folder in which the documents are saved.
Once the document has been saved in a folder in the database it is available for other users to view and use.
When a Work Flow is created, a folder structure may be automatically built in a predetermined location in the database. This folder structure may consist of a folder which has the same name as the Work Flow. Under that folder there may be three folders having predetermined properties:
A first folder, when selected, lists all documents produced from the templates that are associated with the Work Flow. All the documents produced from the templates may be stored here.
A second folder, when selected, enables a search through documents that have used the Work Flow. This enables particular fields in the documents to be interrogated to locate a desired document.
A third folder, when selected, will cause a document to undergo the Work Flow. This is an efficient way for documents produced from the templates to be subjected to the Work Flow.
Advantages of this arrangement, include that the location of documents within the repository is well controlled, and apart from setting folder permissions, there is no additional setup work required.
Alternatively, users may specify where in the database the file will end up once the Work Flow has completed. Greater flexibility is therefore offered at the expense of control.

The folder designated to launch a Work Flow can be located according choice within the folder hierarchy.
The folders may be linked to URLs so that a particular page is displayed when the folder is selected. This makes it easy to perform functions on the folder such as searching for a particular template or publishing a document into the folder.
Templates are the equivalent of the paper forms used traditionally by businesses for process control and record keeping. Because templates are used online they are easier to store and distribute. With the correct implementation of templates, a paperless office can be achieved.
A pop-list, similar to a combo box or pull-down selection box, may be included as a field in a template to allow a list of options to be pulled down, from which a value can be selected for a field.
A file or document that that is created using a template is the equivalent of a completed form. Using a particular template to create a file also determines the folder in which that file will be stored, as a result of the templates connection to a Work Flow.
Some documents have fields that are only relevant to some users, such as the "For office use only" sections. Other documents have fields which are not be seen by some users, such as approval or evaluation fields. In such cases, the field permission for that field can be set so that only specified users can see it on the document. Users without permission will be able to see all other fields, but the specified field will just not appear at all, so they won't even know that it exists.
Information may be received by users in inboxes which automatically indicate when a document has been received.
The folders can be configured to provide access to other resources located on network drives, a corporate intranet or on the world wide web, so providing staff with a single point of access to what they need during the day.
In a second aspect the invention is a customisation process, taking place on data in a database, for a record keeping and process controlling computer system, including the following steps:
Constructing templates for data entry by entering or selecting data to construct labelled fields in a desktop template for display.
Operating the desktop template by entering data into the labelled fields to create documents.
Constructing a series of steps for specified templates, called a Work Flow, that define an ordered series of destinations for documents created by those templates to follow, ending in a selected folder in which the documents are saved.
In a third aspect the invention is a customisable software programs for such a system, including:
   A template maker, existing as data in a database, to construct templates for data entry, operable by entering or selecting data to construct labelled fields in a desktop template for display. The desktop templates are operable by entering data into the labelled fields to create documents.
   And, a Work Flow maker, existing as data in a database, to construct a series of steps for specified templates, called a Work Flow, that define an ordered series of destinations for documents created by those templates to follow, ending in a selected folder in which the documents are saved.
   The invention encompasses the linking of independently functioning software applications and databases (transactional, analytic, and collaborative) via new software components e.g., the super application process manager & context repository.

The evolution of the market for data warehousing showed that there often is a progression from more specific to broader solutions. Research has shown that subject-specific data marts provide more rapid return on investment than a broader, multisubject data warehouse. This result can be explained because there are fewer technical and organizational barriers in the face of an implementation of more limited scope.
The solution is applied to a specific business process in the illustrated embodiment. A convergence around a major business process such as customer management is more manageable near term than a deep, process-aware convergence happening at one time covering all business processes.
In one example convergence of such a process-aware solution architecture occurs around a specific business process domain (e.g., customer relationship management or procurement/supplier management). The resulting solution would include application integration, context capture and management, and other infrastructure-level services.
It is believed that the desktop of the future will be Web-centric and will be the highest level manager with a need to reference multiple process-specific and information systems. A higher-value convergence should start at the business process level first, then at the data integration level in support of the extended business process, and finally with common administration and management of users.

An example of the invention will now be described with reference to the accompanying drawings, in which:
Fig. 1 is a schematic diagram of corporate financial operations.
Fig. 2 is a block diagram of current web based technology.
Fig. 3 is a block diagram outlining the underlying technology of the invention.
Fig. 4 is a desktop for navigation.
Fig. 5 is a desktop for template creation.
Fig. 6 is a desktop for pop list creation.
Fig. 7 is a desktop for changing the order of users in a Work Flow.
Fig. 8 is a desktop for folder maintenance.
Fig. 9 is a desktop showing a document ready to publish.

An embodiment of a system according to the invention is based on data and not code in contrast to previously proposed systems. appearing in the new space of Process Driven Webs. Data configuration means that processes are constructed without the need for computer code to be generated. The system of the invention is loaded as software in a personal computer, or other processor, having a display screen and a keyboard as a data input device. A business user is able to create a *super application* covering existing systems and processes by merely describing the relationships between those systems. The data provided by the user is then stored and used by the Process Manager. This method allows the user to be able to make adhoc changes to these *Super Applications & Processes* without the need for downtime as there is no compiling of code or testing. In fact, there is no need to perform the typical events associated with traditional development when the rules of a business change.

### Standard 3-tier System Approach

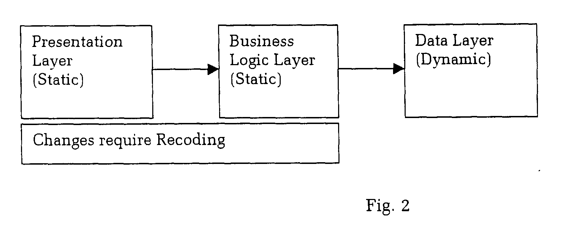

Fig. 2 represents the conventional thinking on web based technology. It highlights the separation between the 3 layers of a typical software implementation. Notice that the business layer which is key to a dynamic environment is static. This means that programmers are required every time the rules governing a business change. This leads to a competitive deficiency.

### Configuring the System with Data

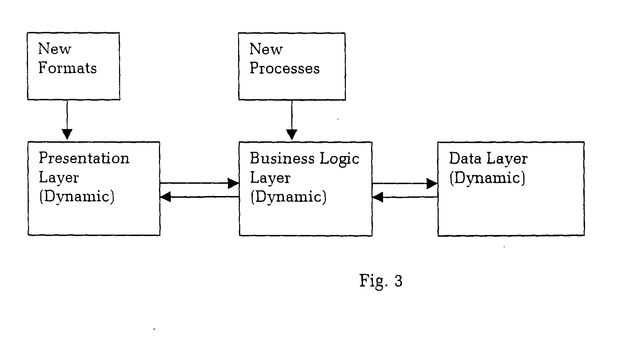

An embodiment of the system of the invention performs everything that is traditionally done through code by using data. This provides for dynamic inserts and changes that can be done in an adhoc way without bringing the system down. This obviously leads to savings in cost from a pure technology point of view without taking into account the return on investment achieved by integrating processes; see Fig. 3.

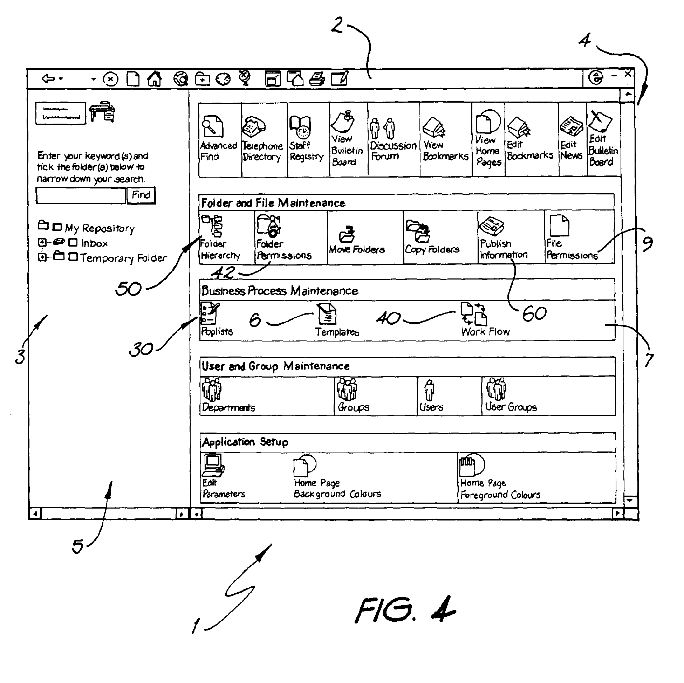

This example of the invention is accessible using a browser to view a series of desktops 1. The desktop displays generally fill the screen as shown in Fig. 4. At the top of the desktop there is a toolbar 2. The left hand side pane is a folder tree 3 which is used to find documents stored in a repository. The right hand side pane is a working section 4 which is usually titled with the task in hand or the current location. Unused areas, such as 5 are also present in the page.
The desktops can be used to perform a variety of functions, some of which will now be described.

### Templates

Templates are the equivalent of the paper forms used traditionally by businesses for process control and record keeping. Because templates are used online they are easier to store and distribute. With the correct implementation of templates, a paperless office can be achieved.
A file that that is created using a template is the equivalent of a completed form. Using a particular template to create a file also determines in which folder within the repository that file will be stored.
From the desktop shown in Fig. 4 it is possible to navigate to the template creation desktop 10 by clicking on the *Templates* icon 6 in the Business *Process Maintenance* section 7. At the bottom of the right hand side of this page there is an in-box 8.

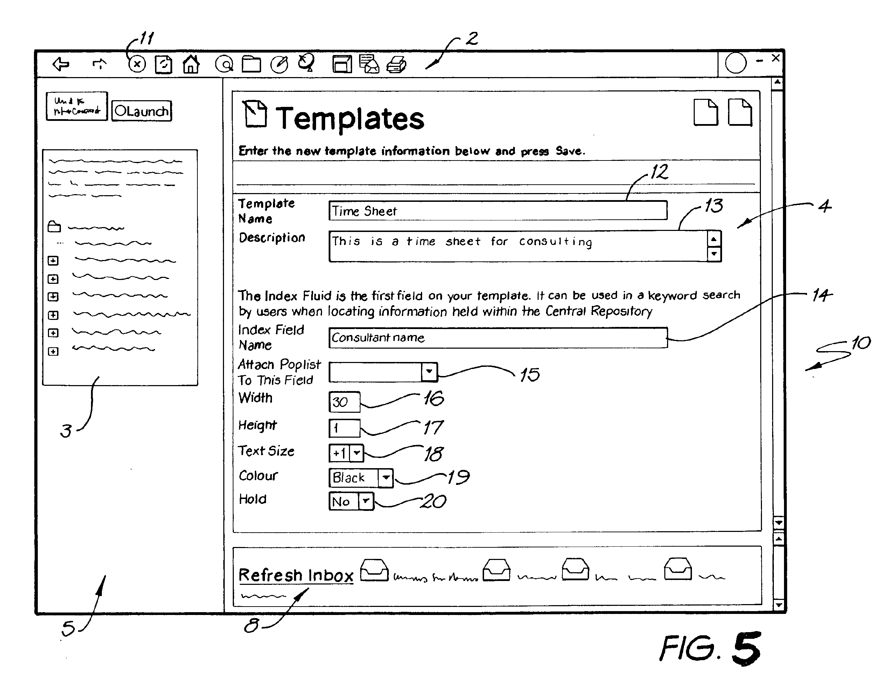

A template is created using the Fig. 5 desktop 10, by setting the appropriate options using the following procedure:
1. Click on the *New* button 11 in the toolbar at the top of the page.
2. Enter a name for the Template in box 12 and an appropriate description in box 13.
   Note: It is important to understand that the values entered for the following fields are what will appear as the names of the fields not the values of the fields. For example if you are creating a contacts Template, you would specify the *Index Field* 14 to be "Family Name". It would not be until you publish a document using this Template that you would specify this field's value to "Smith".
3. Enter the name for the *Index Field* 14 and specify if you want this field to be a Pop-list 15 as well as setting the width 16 and height 17 of the field, the text size 18 and colour 19 and whether you want the text to appear bold 20.
4. A name can also be entered to appear next to a *Expiry Date Field* on the Template. The Expiry Date specifies the date on which a document using this template will no longer be available in the Central Repository.
5. When you have entered all of the information that you require for the Template, click *Save.*
   Once you have saved the Template, You can add Text Fields in the same way.

A template can be edited using the following procedure:
1. Click on the *Templates* icon in the *Business Process Maintenance* section of the desktop.
2. Select the Template that you want to edit from the list.
3. Make the appropriate changes to the template and click *Save.* Refer to the previous section for explanations of each field.

A template can be deleted using the following procedure:
1. Click on the *Templates* icon in the *Business Process Maintenance* section of the desktop.
2. Select the Template that you want to delete from the list.
3. Click *Delete* to remove it.

A text field can be added to a template using the following procedure:
1. Click on the *Templates* icon in the *Business Process Maintenance* section of the desktop.
2. Select the Template to which you want to add a text field.
   The selected template displays.
3. Click on the *New* button in the toolbar at the top of the page.

A list of existing text fields in the template displays.
4. Click on the *New* button in the toolbar at the top of the page.
5. Enter a name for the Text Field, specify if you want it to be a Pop-list, set the data type, select whether it is to be a mandatory field, put it on a new line if desired, set the width and height of the field, the text size and colour and whether you want the text to appear bold.
6. Click *Save.*
   Note: You can view the Template as it will appear by clicking on the *Preview* button in the toolbar at any stage of editing or by scrolling down.

A text field can be deleted from a template using the following procedure:
1. Click on the *Templates* icon in the *Business Process Maintenance* section of the desktop.
2. Select the Template from which you want to delete a text field.
   The selected template displays.
3. Click on the *New* button in the toolbar at the top of the page.
   A list of existing text fields in the template displays.
4. Click on the name of the text field to be deleted.
   An edit text field properties page displays.
5. Click the *Delete* button towards the bottom of the page.
   You will be asked to confirm the deletion
6. Click the *Delete* button again to confirm.

### Pop Lists

A Pop List is similar to a combo box or pull-down selection box that you will find in other applications. It is a field that you can include in a Template that allows you to pull down a list of options from which you can select the value you want for the field.

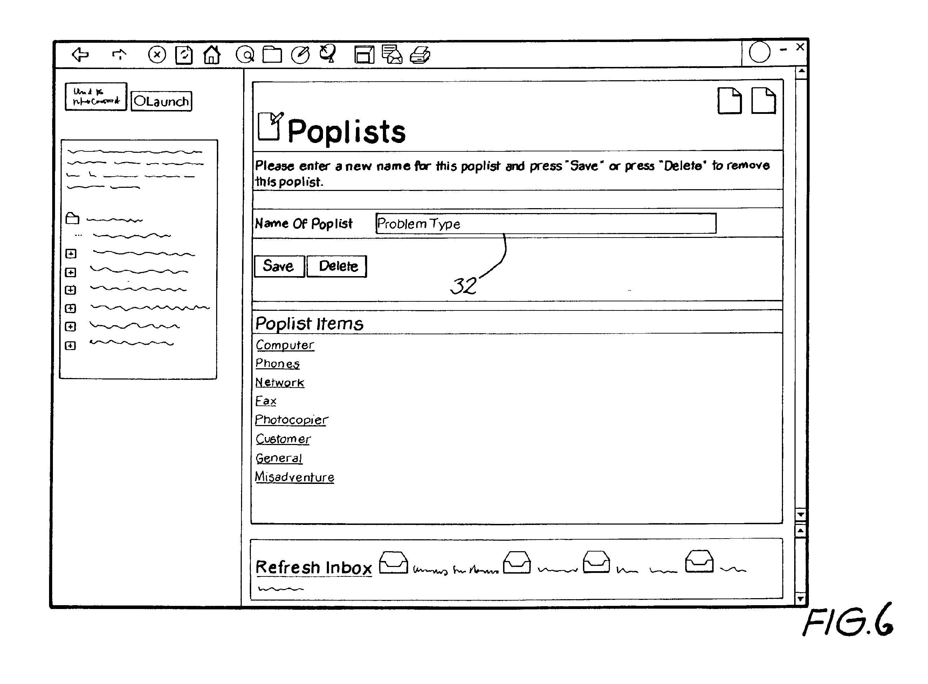

A pop list 15 can be created using the following procedure:
1. Click on the Pop-lists icon 30 in the Business Process Maintenance section 7 of the desktop of Fig. 4. This takes you to the desktop 31 shown in Fig. 6.
2. Click on the New button in the toolbar at the top of the page.
3. Enter a name for the new Pop-list in box 32 and click Next Page.
4. Enter an item that you want to appear in the Pop-list and click New.
5. Continue the last step until all of items have been entered

A pop list can be edited using the following procedure:
1. Click on the Pop-lists icon in the Business Process Maintenance section of the desktop.
2. Click on the name of the Pop-list that you want to edit
3. Change the name of the Pop-list and click Save or click Delete to remove the Pop-list.
4. If you want to edit a pop-list item, click on the Pop-list item, change it's name and click Save or click Delete to remove it.
5. If you want to add a pop-list item, click New, enter the item in the Pop-list Item field and click Save.

A pop list can be deleted using the following procedure:
1. Click on the Pop-lists icon in the Business Process Maintenance section of the desktop.
2. Click on the name of the Pop-list that you want to edit
3. Click Delete to remove the Pop-list.

### Setting Field Permissions

Some documents have fields that are only relevant to some users, such as the "For office use only" sections. Other documents have fields which you might not want some users to see, such as approval or evaluation fields. In such cases, you can set the field permission for that field so that only specified users can see it on the document. Users without permission will be able to see all other fields, but the specified field will just not appear at all, so they won't even know that it exists.

### Procedure:

1. Once you have created a new text field as outlined in the previous section, click on the Change Field Permissions option in the toolbar.
2. If you want to set the permissions for an existing text field, click *New* button from the appropriate template and select the desired field from the list. Click on the *Change Field Permissions* button in the toolbar. (NB: You can't restrict access to the Index field or the Expiry Date field)
3. If the Field has Private Access and you want to add Public Access, Click on *Add Public Access.* If the Field has Public Access and you want to remove it, click on *Remove Public Access.*
4. If you want to set the permission by group, click on *By Group,* click *New,* click the check boxes under *Read* Access and/or *Write Access* next to the relevant Group/s and click *Save.*
5. If you want to set the permission by user, Click on *By User,* click *New,* enter the search criteria for the user for whom you want to grant permissions, and click *Find.* Click the check boxes under *Read* Access and/or *Write Access* next to the relevant users/s and click *Save.*

### Work Flow

A Work Flow is a series of steps that a document will follow before it is available in the Document Repository for other users to view. It is used when a document has to be approved by certain users before it becomes valid. The Work Flow process defines which users the document is forwarded to and in what order each user will receive it.
For example, a consulting Time Sheet may have to be approved by the client and then the consultant's manager. In this case, the Time Sheet Approval Work Flow Process would use the Time Sheet Template and have the client as the first user, then the manager as the second user. The Time Sheet would be published by the consultant and forwarded to the client who may approve it. Then it will be forwarded to the manager who might reject it back to the client for some changes. If the changes are made and the client sends it on again for approval, the manager will receive it again and approve it. Then it will be stored in the Document Repository for use by the accounts department and other relevant users.

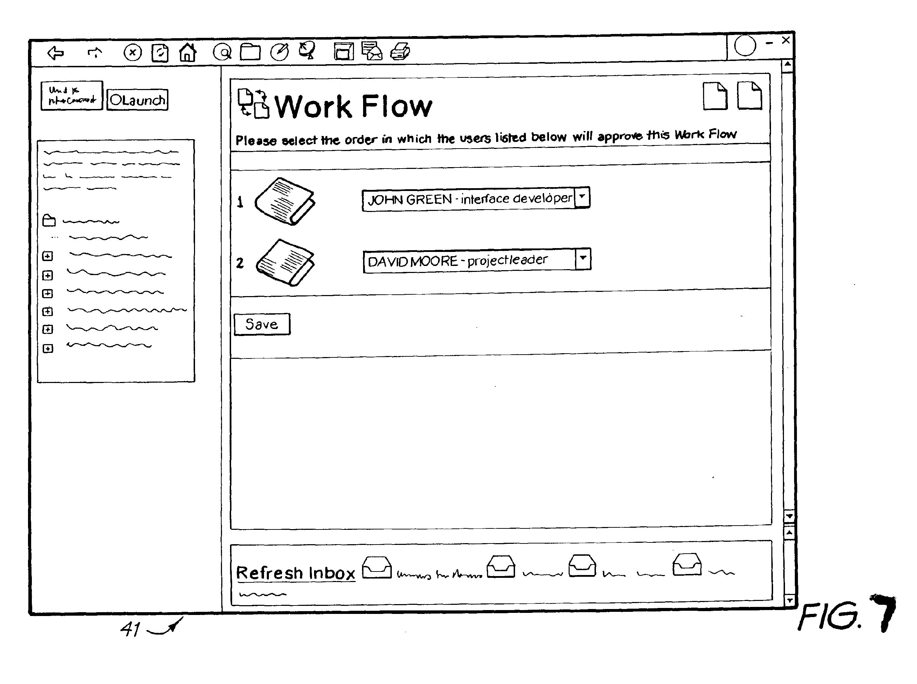

A new Work Flow can be created using the following procedure:
1. Click on the *Work Flow* icon 40 in the *Business Process Maintenance* section 7 of the desktop of Fig. 4.
2. Click on the *New* button in the toolbar at the top of the page.
3. Enter a descriptive name for the Work Flow Process and click *Next Page.*
4. Select a Template to use for this Work Flow by clicking on the radio button next to the Template name and click *Next Page.*
5. Select the users that you want to include in this Work Flow and click *Next Page.* To select multiple users, hold down the Ctrl key and select the desired users.
6. If you want the Document to be published straight into the Repository without requiring approval from anyone, select *Load straight into Document Repository* and click *Next Page.*
7. This takes you to the desktop 41 of Fig. 7. To change the order of the users select the user that you want the document to be sent to first from the first Pop-list, the second user from the second Pop-list and so on. Once the users are all in the desired order, click *Save*.

A Work Flow can be deleted using the following procedure
1. Click on the *Work Flow* icon in the *Business Process Maintenance* section of the desktop.
   A list of work flows displays.
2. Click on the name of the work flow to be deleted.
   An edit Work Flow page displays.
3. Click the *Delete* button
   You will be asked to confirm the deletion.
4. Click the *Delete* button again to confirm or the *List* button to stop the deletion.

### Publishing Work Flows

There are three ways that Work Flows can be published. The method you choose will depend on ease of use preferences and your requirements regarding the final storage location of files in the document repository after completion of the Work Flow. The methods and their characteristics are as follows:
Click the Rapid Business Solutions *Publish* folder for the Work Flow. All files using the Work Flow will be stored in the one location by default (The Rapid Business Solutions *All* folder). Advantages of this method include that the location of documents within the repository is well controlled and apart from setting folder permissions there is no additional setup work required.
Click the *Publish Information* 42 icon in the *Folder and File Maintenance* section 9. Users of this method can specify where the file will end up once the Work Flow has completed. Greater flexibility is therefore offered at the expense of control. In addition to setting appropriate folder permissions Work Flow permissions must also be set.
Click a folder in the navigation pane 3 specifically set up to launch the Work Flow. This method is similar to the first method with the added benefits that a folder other than the Rapid Business Solutions *All* folder can be designated to receive all files. Also, the folder designated to launch the Work Flow can be located according to your choosing within the folder hierarchy. Some set up is however required.

### Folders

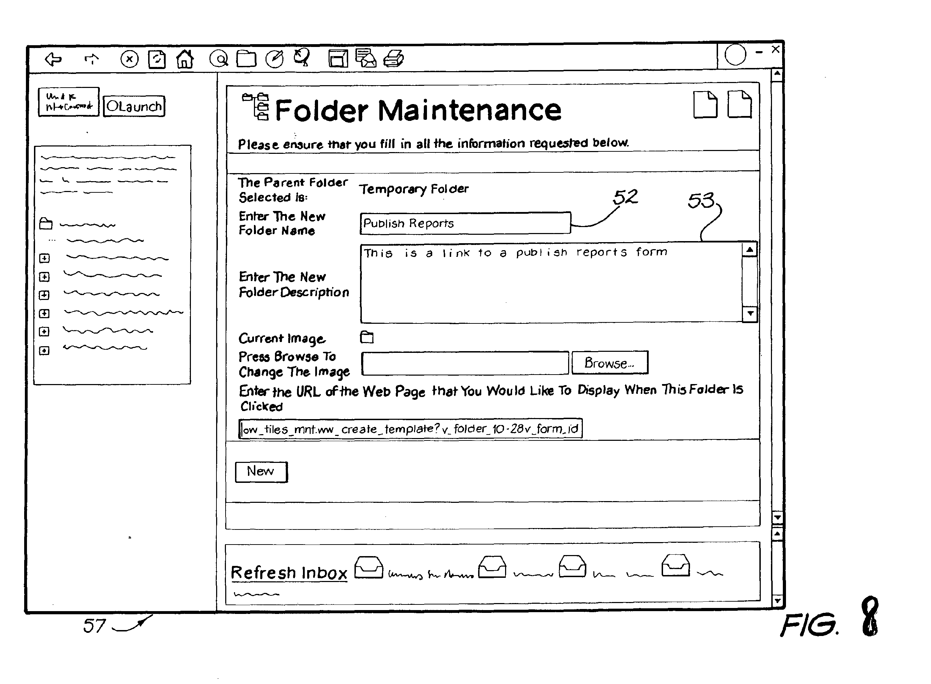

Folders can be created as required by following the procedure below:
1. Click on the *Folder Hierarchy* icon 50 in the *Folder and File Maintenance* 9 section of the desktop 1.
2. Click on the folder that will become the parent to your new Folder. You may have to expand the Folder Tree 3 to find the Folder you want.
3. At desktop 51 shown in Fig. 8, overwrite the existing Folder's Name in box 52, and Description in box 53, with the new Folder's Name and Description.
   Text entered in the Description field will become the bubble help for the folder.
4. You can also change the image used to represent the Folder by clicking the *Browse* button and selecting the desired image.
5. If you want the Folder to link to a web page instead of showing the contents of the Folder, you can enter the URL in the text field at the bottom of the page (refer to section
6. *Click New.*

Folders can be edited using the procedure below:
1. Click on the *Folder Hierarchy* icon 50 in the *Folder and File Maintenance* section 9 of the desktop 1.
2. Click on the Folder that you want to edit. You may have to expand the Folder Tree to find the Folder you want.
3. Make the appropriate changes to the Folder Name, Description, Image and/or URL and click *Save.*

Folders can be deleted using the procedure below
1. Click on the *Folder Hierarchy* icon 50 in the *Folder and File Maintenance* section 9 of the desktop 1.
2. Click on the Folder that you want to delete. You may have to expand the Folder Tree to find the Folder you want.
3. If the Folder that you want to delete has no Sub-Folders, Click *Delete.* If it has got Folders inside it, you have to click *Delete All* or delete the Sub-Folders and then delete the current Folder.

By linking a Folder to a URL you can quickly and easily perform any function, whether it be a search for a particular template or publishing a document into a specific Folder with the appropriate Work Flow.

To find a URL and copy it, the following procedure may be used:
1. Select publish information, select the Folder to publish in, and choose the Work Flow process.
2. Right click on a blank area of the screen and select Properties from the dropdown list that appears.
3. Locate the "Address: (URL)" in the middle of the new pop up window on the screen.
4. Drag the mouse over the "Address: (URL)" from the last forward slash onwards and select Edit, Copy from your browser.
   Eg If the URL was: http://besns_nt2/infocentral/owa/WW_FIND$.startup then you would just copy: WW_FIND$.startup

Create a New Folder and Paste in the URL
5. Click on the *Folder Hierarchy* icon in the *Folder and File Maintenance* section of the desktop.
6. Click on the existing Folder in which you want to create your new Folder. You may have to expand the Folder Tree to find the Folder you want.
7. Overwrite the existing Folder's Name and Description with the new Folder's Name and Description and click *New.* Text entered in the Description field will become the bubble help for the folder. You can also change the image used to represent the Folder by clicking the *Browse* button and selecting the desired image.
8. Click in the URL text field and select *Edit, Paste* from your browser. Then click *New.*

In the example used here when a user clicks on the Folder, they will be taken to the *View Home Pages* screen. This could be useful if their permissions settings did not otherwise allow them to access the *View Home Pages* Icon in the top group on the *Desktop.*

When a folder is first created only the creator of the folder can view it. It is possible to change this by setting the appropriate permissions. Only the folder creator can make these changes, either at the time the folder is created or at any time thereafter. The following options are available:

### Public Access

Allows everyone to view the folder. Also, all users can choose this folder to store a file when publishing a Work Flow they are permitted to use. See o for more information about Work Flows.

### Private Access

Access to the folder is restricted to particular individuals or groups. Those users who have not been granted access will be unable to see the folder in the navigation pane and will be unaware of its existence. A group or individual may be granted either of the following privilege levels:

| | |
|---|---|
| Read Access | Users will see the folder in the navigation pane and they will be able to open the folder but not publish documents to or remove them from the folder. |
| Write Access | In addition to "Read Access" privileges, users can choose this folder to store a file when publishing a Work Flow they are permitted to use. |

### Group/User Access.

When a folder is set up for "Private Access", access to the folder is restricted to particular individuals or groups.
When a group is given read or write access to a folder each member of that group automatically inherits the group's access privileges. Therefore by using groups you can avoid having to add people individually each time a folder is created. This saves time and access can be more reliably controlled. See the *System Reference* for more information about groups.

Public and Private Permissions can be set for a Folder using the following procedure:
1. Click on the *Folder Permissions* icon in the *Folder and File Maintenance* section of the desktop.
2. Click on the Folder for which you want to set the permissions. You may have to expand the Folder Tree to find the Folder you want.
3. If the Folder has Group/User Access and you want to add Public Access, Click on *Add Public Access.* If the Folder has Public Access and you want to remove it, click on *Remove Public Access.*

Setting Group Permissions for a Folder:
1. Click on the *Folder Permissions* icon in the *Folder and File Maintenance* section of the desktop.
2. Click on the Folder for which you want to set the permissions . You may have to expand the Folder Tree to find the Folder you want.
3. Click on *By Group.*
4. Click the *New* button at the bottom of the screen.
5. Click the check boxes under *Read Access* and/or *Write Access* next to the relevant Group/s and click *Save.*

Changing Group Permissions for a Folder:
1. Click on the *Folder Permissions* icon in the *Folder and File Maintenance* section of the desktop.
2. Click on the Folder for which you want to set the permissions. You may have to expand the Folder Tree to find the Folder you want.
3. Click on *By Group.*
4. Make the appropriate changes by clicking the check boxes under *Read Access* and/or *Write Access* next to the relevant group/s and click *Save.*
5. To grant another group permission to the current Folder click *New* and click the check boxes under *Read Access* and/or *Write* Access for the relevant group/s and click *Save.*

Deleting Group Permissions for a Folder:
1. Click on the *Folder Permissions* icon in the *Folder and File Maintenance* section of the desktop.
2. Click on the Folder for which you want to delete the permissions. You may have to expand the Folder Tree to find the Folder you want.
3. Click on *By Group.*
4. To delete the group from the permissions to the current Folder, click on the *Remove Group Permission* check box next to the Group and click *Delete.*

Setting New User Permissions for a Folder:
1. Click on the *Folder Permissions* icon in the *Folder and File Maintenance* section of the desktop.
2. Click on the Folder for which you want to set the permissions. You may have to expand the Folder Tree to find the Folder you want.
3. Click on *By User.*
4. Click the *New* button at the bottom of the screen.
   The *User Search* page then displays.
5. You may now elect to find a particular user's record within the database. Complete one or more fields with information about the user and click *Find.* If you choose to enter nothing and click *Find* then all users will be found.
   A list of one or more users then displays.
6. Click the check boxes under *Read* Access and/or *Write Access* next to the relevant users/s and click *Save.*

Changing User Permissions for a Folder:
1. Click on the *Folder Permissions* icon in the *Folder and File Maintenance* section of the desktop.
2. Click on the Folder for which you want to set the permissions. You may have to expand the Folder Tree to find the Folder you want.
3. Click on *By User.*
4. Make the appropriate changes by clicking the check boxes under *Read Access* and/or *Write Access* next to the relevant user/s and click *Save.*
5. To grant another user permission to the current Folder click New and click the check boxes under *Read Access* and/or *Write Access* next to the relevant user/s and click *Save.*

Deleting User Permissions for a Folder:
1. Click on the *Folder Permissions* icon in the *Folder and File Maintenance* section of the desktop.
2. Click on the Folder for which you want to delete the permissions. You may have to expand the Folder Tree to find the Folder you want.
3. Click on *By User.*
4. To delete a user from the permissions to the current Folder, click on the *Remove User Permission* check box and click *Delete.*

Moving a Folder:
1. Click on the *Move Folders* icon in the *Folder and File Maintenance* section of the desktop.
2. Click on the Folder that you want to move. You may have to expand the Folder Tree to find the Folder you want.
3. Click on the Folder into which you want to move the selected Folder.
   You may have to expand the Folder Tree to find the Folder you want.
4. Repeat the previous two steps to move other Folders.
   Note: If you move a Folder that contains Sub-Folders, the Sub-Folders will also be moved to the new location.

Copying a Folder:
1. Click on the *Copy Folders* icon in the *Folder and File Maintenance* section of the desktop.
2. Click on the Folder that you want to copy. You may have to expand the Folder Tree to find the Folder you want.
3. Click on the Folder into which you want to copy the selected Folder. You may have to expand the Folder Tree to find the Folder you want.
4. Repeat the previous two steps to copy other Folders.
   Note: If you copy a Folder that contains Sub-Folders, the Sub-Folders will also be copied to the new location .

### Publishing Information (Creating a file)

### Procedure:

1. Click on the *Publish Information* icon 60 in the *Folder and File Maintenance* section 9 of the desktop 1.
2. Click on the Folder into which you want to publish your document. You may have to expand the Folder Tree to find the Folder you want.
3. Click on the Work Flow Process that you want to use to publish your document
4. Enter the content into the Template and click *Save.*

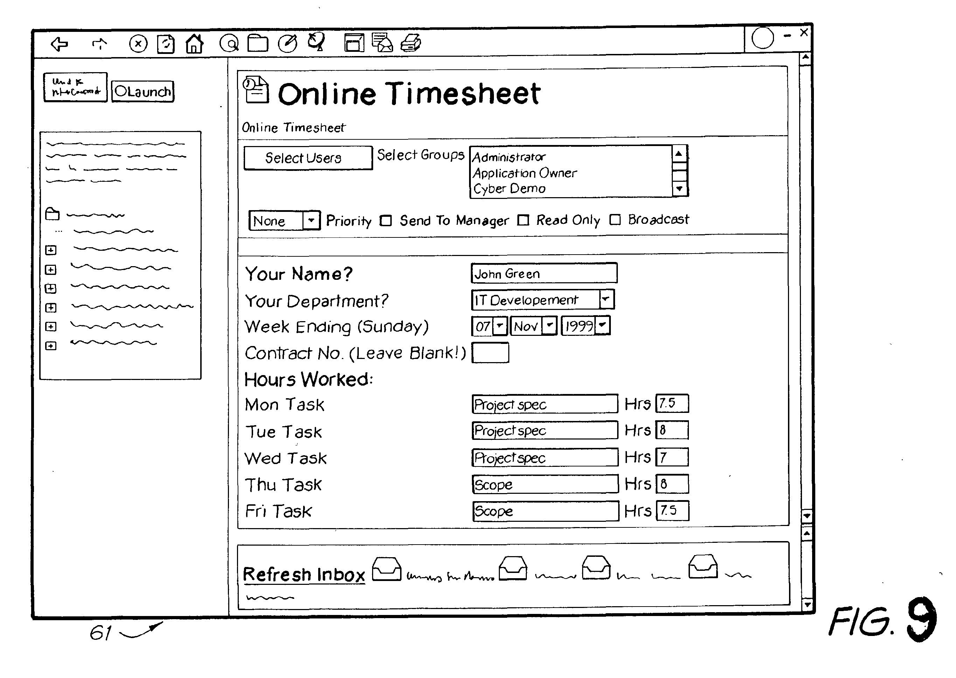

For instance the template 61 shown in Fig. 9 has been populated and is ready to publish

### File Permissions

Setting Public and Private Permissions for a File:
1. Click on the *File Permissions* icon in the *Folder and File Maintenance* section of the desktop.
2. Enter the search criteria for the File for which you want to set the permissions and click *Find.*
3. Click on the File for which you want to set the permissions.
4. If the File has Private Access and you want to add Public Access, click on *Add Public Access.* If the File has Public Access and you want to remove it, click on *Remove Public Access.*

Setting New Group Permissions for a File:
1. Click on the *File Permissions* icon in the *File and File Maintenance* section of the desktop.
2. Enter the search criteria for the File for which you want to set the permissions and click *Find.*
3. Click on the File for which you want to set the permissions.
4. Click on *By Group.*
5. Click *New*.
6. Click the check boxes under *Read* Access and/or *Write Access* for the relevant Group/s and click *Save.*

Changing Group Permissions for a File:
1. Click on the *File Permissions* icon in the *File and File Maintenance* section of the desktop.
2. Enter the search criteria for the File for which you want to set the permissions and click *Find.*
3. Click on the File for which you want to set the permissions.
4. Click on *By Group.*
5. Make the appropriate changes by clicking the check boxes under *Read Access* and/or *Write Access* next to the relevant group/s and click *Save.*
6. To grant another group permission to the current File click *New* and click the check boxes under *Read* Access and/or *Write Access* to the relevant group/s and click *Save.*

Deleting Group Permissions for a File:
1. Click on the *File Permissions* icon in the *File and File Maintenance* section of the desktop.
2. Enter the search criteria for the File for which you want to delete the permissions and click *Find.*
3. Click on the File for which you want to delete permissions.
4. Click on *By Group.*
5. To delete a group from the permissions to the current File, click on the *Remove Group Permission* check box and click *Delete.*

Granting a User Permissions for a File:
1. Click on the *File Permissions* icon in the *Folder and File Maintenance* section of the desktop.
2. Enter the search criteria for the File for which you want to set the permissions and click *Find.*
3. Click on the File for which you want to set the permissions.
4. Click on *By User.*
5. *Click New.*
6. Enter the search criteria for the user for whom you want to grant permissions and click *Find.*
7. Click the check boxes under *Read Access* and/or *Write Access* for the relevant users/s and click *Save.*

Changing a User's Permissions for a File:
1. Click on the *File Permissions* icon in the *Folder and File Maintenance* section of the desktop.
2. Enter the search criteria for the File for which you want to set the permissions and click *Find.*
3. Click on the File for which you want to set the permissions.
4. Click on *By User.*
5. Make the appropriate changes by clicking the check boxes under *Read Access* and/or *Write Access* next to the relevant user/s and click *Save.*

Deleting a User's Permissions for a File:
1. Click on the *File Permissions* icon in the *Folder and File Maintenance* section of the desktop.
2. Enter the search criteria for the File for which you want to delete permissions and click *Find.*
3. Click on the File for which you want to delete permissions.
4. Click on *By User.*
5. To delete a user from the permissions to the current File, click on the *Remove User Permission* check box and click *Delete.*

### Deleting Files

Files are usually maintained as records and therefore never deleted. If it is decided that a file should be deleted then this task must be carried out by an administrator.

### Rapid Business Solutions™

Once you have created a Work Flow Process, a Rapid Business Solution™ is automatically created for you. A Rapid Business Solution™ enables you to create an advanced document searching and publishing module by just setting up a Work Flow Process as described in the previous section.

When a Work Flow Process is created, a Folder structure is built for you under the RBS Folder. This Folder structure consists of a Folder which has the same name as the Work Flow Process. Under that there are Folders named *All, Search* and *Publish.*

The *All* Folder will immediately take you to a list of all documents in the repository that use the template that are associated with the Work Flow. The *Search* Folder will take you to an Advanced Find screen enabling you to search for any document that has been published using this Work Flow Process.

You can quickly and easily publish a document using this Work Flow Process by clicking on the *Publish* Folder within the Rapid Business Solution™ that you have created.

### Procedure:

1. Follow the steps outlined in the previous section to create a Work Flow Process.
2. Expand the RBS Folder that appears at the top of the Folder tree.
   You will see the Rapid Business Solution™ that has been built with the same name as the Work Flow Process that you just created.
3. Expand the Rapid Business Solution™ Folder.
4. You can click on any of the Folders under that to perform the desired function.

### Create a Folder to Launch a Work Flow

If you wish to designate a folder other than the Rapid Business Solutions *All* folder to receive all files or you would like to launch the Work Flow from a location of your choosing within the folder hierarchy then follow the procedure in this section.

### Procedure:

Find the URL of the Work Flow and Copy It
1. Select publish information, select the Folder to publish in, and choose the Work Flow process.
2. Right click on a blank area of the screen and select Properties from the dropdown list that appears.
3. Locate the "Address: (URL)" in the middle of the new pop up window on the screen.
4. Drag the mouse over the "Address: (URL)" from the last forward slash onwards and select Edit, Copy from your browser.
   Eg If the URL was: http://servername/infobank/owa/ww_files_mnt then you would just copy: ww files mnt.

### Create a New Folder and Paste in the Work Flow URL

### Procedure:

1. Click on the *Folder Hierarchy* icon in the *Folder and File Maintenance* section of the desktop.
2. Click on the existing Folder in which you want to create your new child Folder. You may have to expand the Folder Tree to find the Folder you want.
3. Overwrite the existing Folder's Name and Description with the new Folder's Name and Description. Text entered in the Description field will become the bubble help for the folder. You can also change the image used to represent the Folder by clicking the *Browse* button and selecting the desired image.
4. Click in the URL text field and select *Edit, Paste* from your browser. Then click *New.*

### Using the Folder

When a user clicks on the Folder, they will be taken to the Publish screen with the appropriate Destination Folder and Work Flow already selected.

### Creating an Ad-hoc Work Flow Process

As well as having pre-defined Work Flows which reflect standard business processes, you may find that during the day-to-day running of your business, a particular document may need to be passed on to certain users outside of any pre-defined Work Flows.
You can either publish a document specifically for the purpose of sending it to a user or if a document is sent to you from a pre-defined Work Flow, you can send it to a user outside of that Work Flow. An example of the latter situation is if there is a Time Sheet that shows that an employee has worked an exceptional number of hours, you may want to send it on to a Managing Director so that he is aware of the employee's effort. There is no pre-defined Work Flow to send this document to the Managing Director, so as a one off process, you will create an ad-hoc Work Flow to pass this document on to the relevant user.
Ad-hoc Work Flows can be created by any user involved in a pre-defined Work Flow or you can publish a document specifically to send it to a user or group of users.

### Publishing a Document with an Ad-hoc Work Flow

If you want to create a document specifically to send to a user or group of users outside any pre-defined Work Flow, then you publish a document with an ad-hoc Work Flow as outlined below.

### Procedure:

1. Click on the *Publish Information* icon in the *Folder and File Maintenance* section of the desktop.
2. Click on the Folder in which you want to publish your document. You may have to expand the Folder Tree to find the Folder you want.
3. Click on the Work Flow Process that you want to use to publish your document. Typically, you will select a Work Flow Process that loads the document straight into the repository, because you will be selecting the desired users from the ad-hoc Work Flow, not a pre-defined Work Flow.
4. If you want to send your document to specific users, click the *Select Users* button. Enter your search words, click find and then select the desired user/s. You can click *Add* to add a user to the list or *Remove* to remove a selected user. Once you have finished, click *Finish.*
5. If you want to send your document to specific groups, select the group/s from the text area near the top of the page. You can select multiple groups by holding down the Ctrl key.
6. You can select the priority that you want to be associated with the document that you are publishing so that the users who receive it know how important it is. Just select Low, Medium or High from the *Priority* Pop-list.
7. If you want to just send the document to your manager without having to search for that user, you can select the *Send to manager* check box and it will be sent directly to your manager's *Direct Reports* Inbox.
8. You can choose to make the document read-only for the users who receive it so that they can't edit the content of it. Click on the *Read-only* check box to do this.
9. You can send your document to all users by clicking the *Broadcast* check box.
10. Once you have selected all of your options for the ad-hoc Work Flow, enter the content into the Template and click *Save.*

### Creating an Ad-hoc Work Flow from a Pre-defined Work Flow

If you are involved in a pre-defined Work Flow and from this you receive a document which you would like to send to a user or group of users outside of that pre-defined Work Flow, you can create an ad-hoc Work Flow which will allow you to do this. The exceptional time sheet example above, describes a situation like this.

### Procedure:

1. When you receive a document in one of your Inboxes as part of a pre-defined Work Flow, click on that Inbox and select the document from the list.
2. The content of the document is displayed and the ad-hoc Work Flow section appears at the top of the page.
3. If you want to send your document to specific users, click the *Select Users* button. Enter your search words, click find and then select the desired user/s. You can click *Add* to add a user to the list or *Remove* to remove a selected user. Once you have finished, click *Finish.*
4. If you want to send your document to specific groups, select the group/s from the text area near the top of the page. You can select multiple groups by holding down the Ctrl key.
5. You can select the priority that you want to be associated with the document that you are publishing so that the users who receive it know how important it is. Just select Low, Medium or High from the *Priority* Pop-list.
6. If you want to just send the document to your manager without having to search for that user, you can select the *Send to manager* check box and it will be sent directly to your manager's *Direct Reports* Inbox.
7. You can choose to make the document read-only for the users who receive it so that they can't edit the content of it. Click on the *Read-only* check box to do this.
8. You can send your document to all users by clicking the *Broadcast* check box.
9. Once you have selected the required ad-hoc Work Flow options in the top part of the page, you can also amend the file's content in the bottom part of the page if required.
10. Click *Save* to send the work flow file on its way.

### Work Flow Inboxes

We have seen how to set up pre-defined and ad-hoc Work Flows which determine how information is sent to various users. Now we will discuss how information is received by these users.
Inboxes appear at the bottom of each users' screen if the "ICON_WORK_FLOW" application parameter is set to ON (Refer to *System Reference* for more information about Application Parameters) and "Display Inbox For Work Flow Items" is set to YES in the user's profile (Refer to the *System Reference* for more information about user profiles). These notify the user when a document has been sent to them via a Work Flow.
Up to four Inboxes may exist, each of which represents a circumstance under which the user receives that particular document. The inboxes automatically check for incoming documents and notify you when one arrives by a flashing "new" and appearing full.
There is a parameter to set the number of seconds between each check called INBOX_REFRESH_SECONDS. The default is 900 seconds. The user may also refresh their Inboxes manually at any time by clicking the "Refresh Inbox" hyperlink.

### The Waiting for Action Inbox

The *Waiting for Action Inbox* contains all documents that the user has received through pre-defined Work Flows or if they have been selected as a user in an ad-hoc Work Flow.

### Procedure:

1. If the *Waiting for Action Inbox* is full, click on the Inbox.
2. You will see a list of all of the documents that are contained in this Inbox.
3. Select the desired document from the list by clicking on it's file ID.
4. Edit the content of the document if desired, add a comment and click *Done.*
5. You can send this document to other users outside of the pre-defined Work Flow by using the ad-hoc Work Flow section at the top of the page.

### The Returned Inbox

The *Returned Inbox* notifies you if a document in a pre-defined Work Flow which you approved and sent to another user has been rejected by that user and returned to you. These documents will require some amendments.

### Procedure:

1. If the *Returned Inbox* is full, click on the Inbox.
   You will see a list of all of the documents that are contained in this Inbox.
2. Select the desired document from the list by clicking on it's file ID.
3. Scroll to the *Document History* section at the bottom of the page and look at the last user in the list. You will see that there is a *comment* column next to the user's name, which should (if that user added the comment appropriately) specify why that user rejected the document.
4. Make the appropriate changes to the content of the document, add a comment if desired and click *Done.*
5. You can send this document to other users outside of the pre-defined Work Flow by using the ad-hoc Work Flow section at the top of the page.

### The Direct Reports Inbox

A user can elect to send Work Flow files on an ad-hoc basis to their manager. If they do, then these files will be placed in the manager's *Direct Reports* Inbox. Also, the *Direct Reports* Inbox icon on the manager's desktop will flash and appear full, notifying them that files have arrived.

### Procedure:

1. If the *Direct Reports* Inbox is full, click on the Inbox.
   You will see a list of all of the documents that are contained in this Inbox.
2. Select the desired document from the list by clicking on its' file ID.
3. Edit the content of the document if desired, add a comment and click *Done.*
4. You can send this document to other users by using the ad-hoc Work Flow section at the top of the page (refer to o).

### The Public Broadcasts Inbox

A user can elect to send Work Flow files on an ad-hoc basis to everyone. This is called a public broadcast. If they do, then these files will be placed in everyone's *Public Broadcasts* Inbox. Also, the *Public Broadcasts* Inbox icon on everyone's desktops will flash and appear full, notifying them that files have arrived.

### Procedure:

1. If the *Public Broadcasts* Inbox is full, click on the Inbox.
   You will see a list of all of the documents that are contained in this Inbox.
2. Select the desired document from the list by clicking on it's file ID.
   This copy is read-only, so you can't edit or delete this document.

### Work Flow Permissions

Controlling Access via Publish Information. When a user clicks on the Publish Information icon in order to publish a document they are presented with a list of Work Flows from which to choose. Only those Work Flows for which they have been granted permission to use will be shown.

### Procedure:

To grant users permission to use a Work Flow:
1. Click on the Work Flow icon in the Business Process Maintenance section of the Desktop.
2. Click the name of the Work Flow for which you wish to set permissions.
3. Click the Change Work Flow Process Permissions icon in the toolbar at top right.
4. Make a selection as follows. 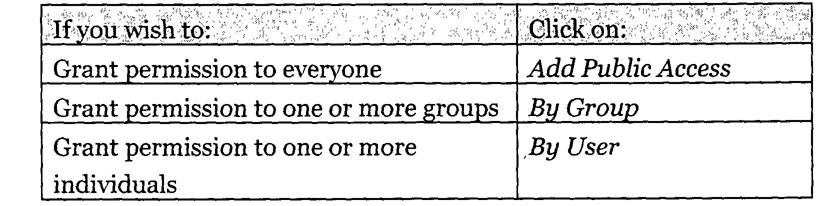
5. The procedure from here is identical to that for setting file permissions (See **Error! Reference source not found.**).

### Controlling Access via Rapid Business Solutions

A user can publish a Work Flow by clicking on the Rapid Business Solutions *Publish* subfolder for that Work Flow (See o). They will only be able to do this however if they have been granted permission to view both the Work Flow folder and its *Publish* subfolder.

### Procedure:

To grant users permission to view these folders follow the procedures in **Error! Reference source not found..**

### Knowledge Management Maintenance.

Folders can be configured to provide access to other resources located on your network drives, your corporate intranet or on the world wide web thus providing staff with a single point of access to what they need during the day.

### Setting up as a Portal to Web Resources

Whether the resources you wish to access through are held on your intranet or are available on the world wide web it is a simple matter to set up fast access from within

### Procedure:

1. Write down or copy to your computer's clipboard the URL (web address) of the page you wish to access.
2. Create a new folder and in the field described with the text "Enter the URL of the Web Page That You Would Like To Display When This Folder Is Clicked" type or paste in the URL you have obtained.
3. By clicking on the folder created users will now be able to access this page through

### Setting up as a Portal to Network Resources

You can set up one click access to files (such as Microsoft Word documents) stored on your organisations local area network (LAN) or on the hard drive of your PC. After following the procedure below users with permission can click on the folder you have created and the file concerned will open for reading only inside their browser.

### Procedure:

1. Write down or copy to your computer's clipboard the path (file address) and file name of the file you wish to access. For linking to files on a LAN this should take the following form:
   \\machine_name\shared_drive_name\path_to_file\file_name.file_extension
   The following is a valid example for linking to a file stored on a computer's C:\ drive:
   C:\My Documents\Word Document.doc
2. Create a new folder and in the field described with the text "Enter the URL of the Web Page That You Would Like To Display When This Folder Is Clicked" type or paste in the path and filename you have obtained. (see section or details on how to create a folder).
3. By clicking on the folder created users will now be able to access this file through.

### Launch Desktop Applications from within

As well as being able to open web pages and files within your web browser with one click from ? you can also set up folders to launch other applications (such as Microsoft Word or Excel).

### Procedure:

1. Write down or copy to your computer's clipboard the path (file address) and file name of the application file you wish to access.
   For example, to launch Microsoft Word you would have something like:
   C:\Program Files\Microsoft Office\Office\Winword.exe
   You may also include what are called "command-line switches" after the application file name. These switches allow you to modify how an application behaves when it starts. For example, you could cause Microsoft Excel to open a particular workbook of your choosing when it starts. Command-line switches for some common applications are listed in Appendix 2.
2. Create a new folder and in the field described with the text "Enter the URL of the Web Page That You Would Like To Display When This Folder Is Clicked" type or paste in the path, filename and any command-line switches that you require. (see section or details on how to create a folder).
3. By clicking on the folder created users will now be able to access the application through .

### Searching/Advanced Find

The Advanced Find feature enables you to search for a document based on the Work Flow to which it is assigned and gives you the power to search the content of a document on a particular field in the document.

### Procedure:

1. Click on the *Advanced Find* icon in the top section of the desktop.
2. Select the Work Flow process/es that you want to search for by clicking the check box next to it and click *Next Page.*
3. Click on the check box next to the field/s that you want to search in and enter your keywords in the text field next to it. If you want all documents, enter % in the text field.
4. If you have checked more than one field, use the Pop-list on the right to choose a Boolean "AND" or a Boolean "OR" for your search. If you select "AND", then all of the fields that you have selected must be matched to return a document. If you choose "OR" then only one of the selected fields has to match a document for it to be found.
5. Click *Find.*
   If any documents are returned, you will be presented with the document information.
6. Click on the file ID in the first column to view the document content or perform any other actions by clicking on the appropriate link.
   If the "Display File Attributes" checkbox is ticked before clicking *Find* the following additional information will be returned for each file:
   Creation Date
   Created By
   Expiry Date

### Exporting Advanced Find Data

To work with the data found by an Advanced Find operation in another application click the *Export* button rather than the *Find* button in the procedure above. A page listing your options displays the following:

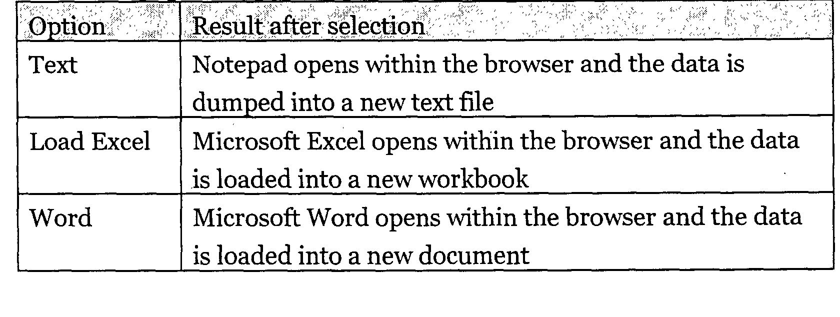

### Home Page

A home page allows users to create an HTML web page that can display any kind of information from personal details to sales figures.

### Procedure to create:

1. Click on the *Edit Your Home Page* icon in the top section of the desktop.
2. To set your web page background click on *Press to set Background Image* and then select an image from the list displayed.
3. To set the image that will appear at the top of the web page click on *Press to set Foreground Image* and then select an image from the list displayed
   If an image you require is not available then contact your administrator. They may be able to add it to the appropriate list for you.
4. Enter the text that you want to appear on your Home Page in the *Home Page Text* text area. You can enter HTML code straight into here to display images that are stored in the system or make use of any other HTML features. The *Home Page Header* text area is the same as the *Home Page Text* area except it displays its contents at the top of your Home Page.
5. Click *Save.*

### Procedure to edit:

1. Click on the *Edit Your Home Page* icon in the top section of the desktop.
2. Make the appropriate changes to the Home Page images, text or HTML and click *Save.*
3. You can preview the Home Page by clicking on the *Preview Your Home Page* icon in the toolbar at the top of the page.

### Procedure to view:

1. Click on the View Home Page icon in the top section of the desktop.
2. Enter the search criteria for the user whose Home Page you want to view and click Find.
   Note: You can leave the search criteria blank and click Find to view all users
3. Click on the User ID of the user whose Home Page you want to view from the list.
   Similar procedures are used with the following:

### A Bulletin Board

The Bulletin Board is similar to the Home Page except that there is only one Bulletin Board and it is generic to the organisation. The Bulletin Board is a place to post any information that needs to be quickly and easily distributed to all users.

### Discussion Forums

A Discussion Forum is a topic or issue that is raised and left open for discussion between users. A Discussion Forum is created and Categories are added to it. Users can raise questions relating to the Category. The questions have to be approved before they are published within the topic. Once a question is approved, it can be viewed and answered by other users.

### Bookmarks

Bookmarks allow you to save a document's location and then quickly return to that document by accessing the bookmark. You can organise your bookmarks into different Folders such as Proposals or Reports.

### Industrial Applicability

Information systems exist within an organizational web that links people, tools, and products with work processes. Process Driven Webs (PDW) explicitly integrate these entities and offer clear advantages over more traditional intranets/extranets in organizational process redesign.

Although business process reengineering (BPR) has been promoted throughout the decade as a way to streamline organizations and improve productivity, three out of four BPR efforts reportedly fail outright, fall short of their performance goals, or are otherwise inadequate. There are thought to be two reasons for this. First, most tools and methods for BPR concentrate on upstream process-design activities like modeling and redesign, almost to the exclusion of mid-stream transitional activities and downstream activities that incorporate the implemented processes into work routines.

Second, most efforts do not account for the existing "organizational web"―the social and technological infrastructure that spans not only computer-based information systems, but also organizational charts, office and building configurations, telecommunications systems, transportation and distribution channels, resource-to-product processes, and workflows.

Designers of intranet or Web-based networked information systems are increasingly expected to model the organizational web so that an information system can successfully support it.

Unfortunately understanding how people implement and incrementally evolve their work processes continue to be considered secondary to simpler concerns such as selecting which browsers, servers, and associated resources to use. Thus, the likelihood remains of low-performing organizational processes and marginally usable information systems.

Corporate intranets/extranets may offer a successful way to implement more effective systems. In the approach described here, process-driven webs (PDWs) support a computer-based representation of an organizational web.

This differs from traditional webs, which have no explicit representation of the processes they support. By directly supporting the explicit modeling of the organizational processes implemented on a wide-area network, PDWs shift the BPR focus from the traditional upstream activities of process modeling and redesign to midstream and downstream activities, such as facilitating feedback for continuous process improvement.

### Characteristics of a PDW

An intranet/extranet is a TCP/IP network that provides a foundation for sharing information in a corporate setting. It supports sub-systems for applications such as network management, group-ware, and conferencing; and it provides access through a Web browser to corporate information in networked file systems and database management systems. However, business processes that access and update information are buried in programs and dispersed across execution scripts and Web pages. As a result, they can appear disjointed, unstructured, or opaque to many users. Furthermore, changing these business processes often requires programming skill, which disables rather than empowers many process stakeholders. For these reasons, CGI programming languages, document markup languages, or database access languages are poor choices for describing business processes. They do not help people describe, understand, try out, and revise the core processes they routinely perform.

PDWs add subsystems that support configurational redesign, integration, and continuous improvement of organizational processes. PDWs can be implemented in different ways, for example, through workflow and database management systems, network operating environments, or ad hoc Web-based scripting. In the case of the described embodiment, they require a formal business process model that can be represented as data. The iLaunch PDW can use this representation to interpret a process model so that, for example, links to Web pages or frames are automatically updated where process actions occur. This contrasts with conventional intranets that use handcrafted links and CGI programs to deliver business transaction steps, which require tedious editing and reprogramming to accommodate process changes.

### Super Application Process Manager

If a multiplicity of webs show up in the same enterprise, there is an obvious problem. Each intranet/extranet must be administered separately, registering users based on roles and responsibilities to ensure security as well as the appropriateness of the information presented. This system management issue alone should drive convergence to a common enterprise view.
The problem with a convergence at the user interface level is that all the relevant applications and databases underlying the web are integrated only at a superficial level. This should not be surprising, since user interface integration is the easiest to implement. Many technology suppliers are in a position to bring to market such a product, a Web-browser-based user interface with customization capabilities from which diverse applications can be launched.
But applications consist of three levels: user interface, business rules or process, and data. Integration across applications can be achieved at any of these levels. If one achieves the linkage only at the user interface level, however, each user bears the burden of semantic discontinuity. In such a scenario, users have the ability to view any and all types of information to which they are authorized. However, users must sort out any inconsistency in meaning across the disparate information they see. Integration at the user interface level is only "skin-deep."
Alternatively, one can integrate applications at the business process and data levels, a more challenging but potentially more rewarding task. All users benefit through a common understanding of business information.

A more meaningful convergence strategy can be achieved by examining business process requirements. This leads to considering the underlying data infrastructure to support the processes causing the intranet/extranet to be linked to the extended process and data structures defined.
The following is required for convergence of IT systems that can support extended business processes and the underlying heterogeneous data:
- **Extended process definition and application integration.** The steps behind each business process are defined for each user. This is an extended business process that spans multiple applications: transaction processing, both analytic, and collaborative.
- **Context management and data integration.** The context repository can record the state of the process when information (structured data or documents) is entered or updated.
- **Common web with common administration.** The web provides each user with a business view that is personalized to his or her multiple roles and responsibilities. Common administration and management are enabled by bringing together the mapping of users to business process tasks as captured in the process definitions. This is a more lasting user administration and management solution than what could be achieved as part of the initial "skin-deep" convergence.

Business processes are being extended to include the ability not simply to run business operations but to review and optimize those operations based on an analysis of the pertinent business information. There is a strong business case for this, as businesses seek to gain competitive advantage by leveraging the latest customer and supplier information as rapidly as possible.
With the broadening of business processes, the likelihood increases that multiple applications must be linked together in support of each major process. A process manager ranging across applications is needed to keep state information relating a user to specific tasks within an extended business process. This *super application process manager* enables the definition of a process that spans either existing applications or new applications to form a closed loop system. Existing applications could be encapsulated and then accessed to provide bounded, well-defined functions with specified inputs and outputs.

The steps of a business process are mapped to existing or new applications, and the underlying data flows supporting the steps are specified. All users who cooperate in a broad process (such as procurement or customer management) benefit by the common understanding of the information accessed within the process. Then people, according to their roles and responsibilities, are mapped to specific steps requiring those people within the process.
In terms of the problem being addressed, key requirements of the super application process manager are addressed by a new class of software called *Businessware*. Businessware addresses the need to tie applications together at a business-rule level, the process definition role of the super application process manager.
The following capabilities of Businessware support the definition and management of a business process that ranges across multiple applications:
- **Integration of existing applications.** The goal is to transparently leverage and bring together what currently exists rather than to introduce some new technology that forces existing information assets to change in order to deal with the new technology.
- **A middleware foundation featuring event-driven processing.** Middleware that supports event-driven processing is a good foundation for the super application process manager. It is very important to enable companies to build application integration scenarios using the semantics of the "business event." For example, compare the transfer of transactional information to a data warehouse based on prespecified business events versus transfers based on a preset schedule. The former strategy shortens the lag time for managers to respond to the latest-breaking business trends.
- **Production workflow.** Workflow here is implied in a way that goes beyond document routing. The super application process manager, sitting above multiple applications that cooperate in a business process retains information on the state of the process for a given user at any point in time
- **Business modeling.** The prior three capabilities deal with the execution environment. Business modeling relates to the way the extended process can be specified. The goal is to be able to model the process at the level of business rules to enable the participation of those business people who best understand the process requirements.

### Context Management and Data Integration

The need to preserve contextual information argues for a context repository. The problem with repositories of any sort has always been the difficulty in populating and maintaining this resource. Appointing an individual as repository manager is not sufficient; broad organizational support is needed. Putting an undue burden on individuals, even for a worthy goal, will tend to increase resistance. Automating much of the capture of contextual information will reduce the burden on individuals and thus tend to increase acceptance.
The key to automating context capture is *timing.* If the contextual information isn't stored when the process state is in effect, the opportunity is lost. It is very difficult to recreate the context later, or ask users to recreate the context after the fact. However, much can be done to automate the capture of context while the relevant events are transpiring. Real-time communication between the super application process manager and the context repository seizes the moment when the contextual information is at hand and stores this metadata with references to the relevant information objects, enabling future context-based retrieval.
By managing the extended business process, the super application process manager can serve a key role in support of information sharing. It can direct the persistent storage of process context or state information that is anticipated to be relevant to future users who seek to learn from the experience of others. Not all state information should be preserved, but a process definition can establish priorities on which state information should be retained, anticipating future needs for contextual information. Using this prioritization, the super application process manager sends selected process state information to a context repository as deemed necessary to support future context-based search and retrieval.
For example, a marketing manager reviews the initial sales results after a discount offer and decides whether to extend it. Or a portfolio manager, after viewing a forecast predicting end-of-quarter performance, decides whether to sell an asset before the end of the quarter to affect the final results. The process manager can flag and store the information describing these decisions and the context in which they were made. Maintaining this context enables future users to access information relevant to their role in a specific business process.

XML is well positioned to become a metadata standard for enabling access to broader sources of data in support of diverse transactional, analytic, and knowledge management applications. The broad adoption of XML also would make possible a higher degree of automation, such as intelligent agents deployed to read XML-based metadata. Agent technology promises the ability to support an extended business process by bridging autonomously developed and separately executing business applications.
The software for the system by which the process of the invention is executed can be stored on any suitable computer readable medium, such as floppy disk, computer hard drive, CD-ROM, Flash ROM, non-volatile ROM and RAM. The medium can be magnetically or optically readable.
It will be appreciated by persons skilled in the art that numerous variations and/or modifications may be made to the invention as shown in the specific embodiments without departing from the scope of the invention as broadly described. The present embodiments are, therefore, to be considered in all respects as illustrative and not restrictive.

## Claims

1. A customisable record keeping and process controlling computer system, including:
a template maker, existing as data in a database, to construct templates, existing as data in a database, for data entry, the template maker being operable by entering or selecting data to construct labelled fields in a desktop template for display;
a desktop template being operable by entering data into the labelled fields to create documents; and,
a work flow maker, existing as data in a database, to construct a series of steps for specified templates, that define an ordered series of destinations for documents created by those templates to follow, ending in a selected folder in which the documents are saved.

2. The system according to claim 1, where once a document has been saved in a folder it is available for other users to view and use.

3. The system according to claim 1, where when the work flow maker constructs a series of steps it also builds a folder structure in a predetermined location.

4. The system according to claim 3, where the folder structure consists of a folder which has the same name as the series of steps.

5. The system according to claim 4, where under that folder there are three folders having predetermined properties:
a first folder, that when selected, lists all documents produced from the templates that are associated with the series of steps, and where all the documents produced from the templates are stored;
a second folder, that when selected, enables a search through documents that have used the series of steps, and which enables particular fields in the documents to be interrogated to locate a desired document; and
a third folder, that when selected, will cause a document to undergo the series of steps.

6. The system according to claim 5, where the folders are linked to URLs so that a preselected page is displayed when a folder is selected.

7. The system according to claim 1, where a pop-listcombo box or pull-down selection box, is included as a field in a template to allow a list of options to be pulled down, from which a value can be selected for a field.

8. The system according to claim 1, where field permissions are set to prevent users without permission to access a field from accessing that field.

9. The system according to claim 1, where documents are received by users in inboxes which automatically indicate when a document has been received.

10. The system according to claim 4, where folders are configured to provide access to additional resources to provide staff with a single point of access from the system to those resources.

11. A customisation process, taking place on data in a database, for a record keeping and process controlling computer system, including the following steps:
constructing templates for data entry by entering or selecting data to construct labelled fields in a desktop template for display;
operating the desktop template by entering data into the labelled fields to create documents;
constructing a series of steps for specified templates, that define an ordered series of destinations for documents created by those templates to follow, ending in a selected folder in which the documents are saved.

12. The process of claim 11, including the further step of saving a document in a folder at the end of the series of steps and then making the document available for other users to view and use.

13. The process of claim 12, including the further step of, when a series of steps is created, automatically building a folder structure in a predetermined location.

14. The process of claim 13, where the folder structure consists of a folder which has the same name as the series of steps

15. The process of claim 14, where under that folder there are three folders having predetermined properties:
a first folder, that when selected, lists all documents produced from the templates that are associated with the series of steps, and all the documents produced from the templates are stored in the first folder;
a second folder, that when selected, enables a search through documents that have used the series of steps to enable particular fields in the documents to be interrogated to locate a desired document; and
a third folder, that when selected, will cause a document to undergo the series of steps.

16. The process of claim 15, where the folders are linked to URLs so that a particular page is displayed when the folder is selected.

17. The process of claim 11, where a pop-list, combo box or pull-down selection box is included as a field in a template to allow a list of options to be pulled down, from which a value can be selected for a field.

18. The process of claim 11, including the step of allocating field permissions to fields to prevent a user without permission from viewing that field.

19. The process of claim 11, including the further step of receiving a document in an inbox which automatically indicates when a document has been received.

20. The process of claim 11, where the folders are configured to provide access to external resources to provide a single point of access.

21. A customisable software program, including
a template maker, existing as data in a database, to construct templates, existing as data in a database, for data entry, the template maker being operable by entering or selecting data to construct labelled fields in a desktop template for display;
a desktop template being operable by entering data into the labelled fields to create documents; and,
a work flow maker, existing as data in a database, to construct a series of steps for specified templates, that define an ordered series of destinations for documents created by those templates to follow, ending in a selected folder in which the documents are saved.

22. The software programs according to claim 21, where once a document has been saved in a folder it is available for other users to view and use.

23. The software programs according to claim 21, where when the work flow maker constructs a series of steps it also builds a folder structure in a predetermined location.

24. The software programs according to claim 23, where the folder structure consists of a folder which has the same name as the series of steps.

25. The software programs according to claim 24, where under that folder there are three folders having predetermined properties:
a first folder, that when selected, lists all documents produced from the templates that are associated with the series of steps, and where all the documents produced from the templates are stored;
a second folder, that when selected, enables a search through documents that have used the series of steps, and which enables particular fields in the documents to be interrogated to locate a desired document; and
a third folder, that when selected, will cause a document to undergo the series of steps.

26. The software programs according to claim 25, where the folders are linked to URLs so that a preselected page is displayed when a folder is selected.

27. The software programs according to claim 21, where a pop-listcombo box or pull-down selection box, is included as a field in a template to allow a list of options to be pulled down, from which a value can be selected for a field.

28. The software programs according to claim 21, where field permissions are set to prevent users without permission to view a field from seeing that field.

29. The software programs according to claim 21, where documents are received by users in inboxes which automatically indicate when a document has been received.

30. The software programs according to claim 24, where folders are configured to provide access to additional resources to provide staff with a single point of access from the software programs to those resources.

31. A process for customising record-keeping and process controlling software in a computer system having:
a display screen;
an input device;
a processor, including a memory storing the said software;
the method comprising generating a template on a screen for data entry by entering or selecting data via the input device to fill in labelled fields in the template to form a document; and
creating a workflow as data in the memory, defining an ordered series of destinations for the document formed in the template to follow, ending in a selected folder in which the document is saved.

32. A computer-readable medium having computer-executable instructions for performing a process for customising record-keeping and process controlling software comprising:
generating a template for data entry by entering or selecting data to fill in labelled fields in the template to form a document; and
creating a workflow as data in a memory, defining an ordered series of destinations for the document formed in the template to follow, ending in a selected folder in which the document is saved.
